# EUROPÄISCHE PATENTANMELDUNG

(11) **EP 4 382 011 A1**
(43) Veröffentlichungstag der Anmeldung: **12.06.2024**
(21) Anmeldenummer: 23215393.2
(22) Anmeldetag: 08.12.2023
(51) Int. Cl.: A47J 42/46, A47J 42/04, A47J 42/06

(54) **KAFFEEMUEHLENSYSTEM**

(30) Priorität: 09.12.2022 LU 503169
(71) Anmelder: Biernatek, Eduard, 63110 Rodgau (DE)
(72) Erfinder: Biernatek, Eduard, 63110 Rodgau (DE)
(74) Vertreter: Hoffmann, Jürgen

(57) **Zusammenfassung**

Die Erfindung betrifft ein Kaffeemühlensystem mit einer Kaffeemühle (1), die ein Gehäuse (2) und ein in dem Gehäuse angeordnetes Mahlwerk beinhaltet, und mit einer Antriebsvorrichtung (3) zum Antreiben des Mahlwerks. Das Kaffeemühlensystem zeichnet sich dadurch aus, dass die Kaffeemühle (1) beweglich und/oder selbstzentrierend an der Antriebsvorrichtung (3) ankoppelbar ist oder angekoppelt ist.

## Beschreibung

Die Erfindung betrifft ein Kaffeemühlensystem mit einer Kaffeemühle, die ein Gehäuse und ein in dem Gehäuse angeordnetes Mahlwerk beinhaltet, und mit einer Antriebsvorrichtung zum Antreiben des Mahlwerks.

Kaffeemühlensysteme der eingangs genannten Art sind zumeist in der Weise aufgebaut, dass das Gehäuse die Antriebsvorrichtung in Form eines elektrischen Antriebsmotors beinhaltet. Die Antriebsvorrichtung ist hierbei werkseitig fest in dem Gehäuse eingebaut und relativ zu dem ebenfalls fest in dem Gehäuse eingebauten Mahlwerk in aufwändiger Weise genau justiert. Im Falle einer nicht vollständig korrekten Justierung kommt es zu einer verringerten Lebensdauer, zu Fehlfunktionen, wie einem plötzlichen Verklemmen, und/oder zu Beschädigungen. Da ein einfaches Zerlegen in Komponenten für Wartungs- und Reparaturzwecke bei derartigen Kaffeemühlensystemen zumeist nicht vorgesehen und zumeist auch nicht möglich ist, lohnt eine Reparatur in der Regel nicht, wenn die oben genannten Probleme auftreten.

Es ist daher die Aufgabe der vorliegenden Erfindung, ein Kaffeemühlensystem anzugeben, das bei einfachem Aufbau ein zuverlässiges Antreiben des Mahnwerks ermöglicht.

Die Aufgabe wird ein Kaffeemühlensystem der eingangs genannten Art gelöst, das dadurch gekennzeichnet ist, dass die Kaffeemühle beweglich und/oder selbstzentrierend an die Antriebsvorrichtung ankoppelbar ist oder angekoppelt ist.

Das erfindungsgemäße Kaffeemühlensystem hat den ganz besonderen Vorteil, dass Kräfte, die einen erhöhten Verschleiß von Komponenten des Kaffeemühlensystems und/oder ein Verklemmen der Verbindung zwischen der Antriebsvorrichtung und der Kaffeemühle verursachen könnten, nicht wirksam werden können, insbesondere weil die bewegliche Anbindung ein Ausweichen der relevanten Komponenten relativ zueinander ermöglicht, und/oder dass derartige Kräfte durch die Selbstzentrierung gar nicht erst auftreten.

Die Antriebsvorrichtung kann vorteilhaft einen elektrischen Antriebsmotor aufweisen. Außerdem kann die Antriebsvorrichtung wenigstens ein dem elektrischen Antriebsmotor triebtechnisch nachgeschaltetes Getriebe aufweisen. Der Antriebsmotor und das Getriebe können insbesondere koaxial zueinander angeordnet sein.

Bei einer alternativen Ausführung weist die Antriebsvorrichtung ein manuell betätigbares Bedienelement, wie beispielsweise eine Kurbel oder einen hin-und-her schwenkbar gelagerten Betätigungshebel auf, wobei dem manuell betätigbaren Bedienelement wenigstens ein Getriebe triebtechnisch nachgeschalteten sein kann.

Bei einer besonderen Ausführung weist die Kaffeemühle ein rotierbar gelagertes Antriebselement zum Einleiten eines Drehmomentes in das Mahlwerk auf. Darüber hinaus kann vorteilhaft vorgesehen sein, dass die Antriebsvorrichtung ein, insbesondere um eine Abtriebsrotationsachse rotierbar gelagertes und/oder zur Rotation angetriebenes, Abtriebselement aufweist, das mit dem Antriebselement drehmomentübertragend verbunden ist oder verbindbar ist. Durch das Verbinden des Antriebselements der Kaffeemühle mit dem Abtriebselement der Antriebsvorrichtung wird eine drehmomentübertragende Verbindung hergestellt, um das Mahlwerk für einen Mahlvorgang zur Rotation antreiben zu können.

Bei einer besonderen Ausführung ist das Antriebselement, insbesondere eine Antriebswelle des Antriebselements, drehfest mit einem Mahlrotor, insbesondere einem Mahlkegel, des Mahlwerks verbunden. Bei einer solchen Ausführung kann ein Mahlstator des Mahlwerks, beispielsweise ein Mahlring, relativ zu dem Gehäuse drehfest angeordnet sein.

Bei einer ganz besonders vorteilhaften Ausführung ist die an die Antriebsvorrichtung ankoppelte Kaffeemühle in einer zur Antriebsrotationsachse senkrechten Ebene und/oder in einer zur Abtriebsrotationsachse senkrechten Ebene beweglich. Insbesondere kann die an die Antriebsvorrichtung ankoppelte Kaffeemühle in einer zur Antriebsrotationsachse senkrechten Richtung und/oder in einer zur Antriebsrotationsachse senkrechten Richtung linearbeweglich sein. Alternativ oder zusätzlich kann vorteilhaft vorgesehen sein, dass die an die Antriebsvorrichtung ankoppelte Kaffeemühle in Richtung der Antriebsrotationsachse unbeweglich ist. Bei einer solchen Ausführung ist ein erhöhter Verschleiß von Komponenten des Kaffeemühlensystems und/oder ein Verklemmen der Verbindung zwischen der Antriebsvorrichtung und der Kaffeemühle wirkungsvoll vermieden.

Bei einer besonderen Ausführung ist die Koppelvorrichtung, mittels der das Gehäuse der Kaffeemühle an die Antriebsvorrichtung ankoppelbar ist, derart ausgebildet, dass sie eine Bewegung der an die Antriebsvorrichtung ankoppelten Kaffeemühle in einer zur Antriebsrotationsachse senkrechten Ebene und/oder in einer zur Abtriebsrotationsachse senkrechten Ebene zulässt. Insbesondere kann die Koppelvorrichtung derart ausgebildet sein, dass sie eine Linearbewegung der an die Antriebsvorrichtung ankoppelten Kaffeemühle in einer zur Antriebsrotationsachse senkrechten Richtung und/oder in einer zur Abtriebsrotationsachse senkrechten Richtung zulässt.

Alternativ oder zusätzlich kann die Koppelvorrichtung, mittels der das Gehäuse der Kaffeemühle an die Antriebsvorrichtung ankoppelbar ist, derart ausgebildet sein, dass sie keine Bewegung der an die Antriebsvorrichtung ankoppelten Kaffeemühle in Richtung der Antriebsrotationsachse und/oder in Richtung der Abtriebsrotationsachse zulässt. Es wurde erkannt, dass ein erhöhter Verschleiß von Komponenten des Kaffeemühlensystems und/oder ein Verklemmen der Verbindung zwischen der Antriebsvorrichtung und der Kaffeemühle auch dann vermieden werden kann, wenn keine Bewegung der an die Antriebsvorrichtung ankoppelten Kaffeemühle in Richtung der Antriebsrotationsachse und/oder in Richtung der Abtriebsrotationsachse möglich ist. Dennoch ist das Vorsehen einer derartigen Beweglichkeit nicht grundsätzlich ausgeschlossen.

Bei einer ganz besonders vorteilhaften Ausführung ist die an die Antriebsvorrichtung ankoppelte Kaffeemühle (alternativ oder zusätzlich zu den oben beschriebenen möglichen Beweglichkeiten) um eine zur Antriebsrotationsachse nichtparallele und nichtkoaxiale Schwenkachse und/oder um eine zur Abtriebsrotationsachse nichtparallele und nichtkoaxiale Schwenkachse schwenkbar. Insbesondere kann die an die Antriebsvorrichtung ankoppelte Kaffeemühle um eine zur Antriebsrotationsachse senkrechte Schwenkachse und/oder um eine zur Abtriebsrotationsachse senkrechte Schwenkachse schwenkbar sein.

Bei einer besonderen Ausführung ist die Koppelvorrichtung, mittels der das Gehäuse der Kaffeemühle an die Antriebsvorrichtung ankoppelbar ist, derart ausgebildet, dass sie eine Schwenkbewegung der an die Antriebsvorrichtung ankoppelten Kaffeemühle um eine zur Antriebsrotationsachse nichtparallele und nichtkoaxiale Schwenkachse und/oder um eine zur Abtriebsrotationsachse nichtparallele und nichtkoaxiale Schwenkachse zulässt. Insbesondere kann die Koppelvorrichtung derart ausgebildet sein, dass sie eine Schwenkbewegung der an die Antriebsvorrichtung ankoppelten Kaffeemühle um eine zur Antriebsrotationsachse senkrechte Schwenkachse und/oder um eine zur Abtriebsrotationsachse senkrechte Schwenkachse zulässt. Insbesondere kann

Bei einer ganz besonders vorteilhaften Ausführung ist die an die Antriebsvorrichtung ankoppelte Kaffeemühle (alternativ oder zusätzlich zu den oben beschriebenen möglichen Beweglichkeiten und/oder Schwenkbarkeiten) bezogen auf eine zur Richtung der Antriebsrotationsachse verschiedene Richtung und/oder bezogen auf eine zur Richtung der Abtriebsrotationsachse verschiedene Richtung selbstzentrierend an die Antriebsvorrichtung ankoppelbar oder angekoppelt. Insbesondere kann vorteilhaft vorgesehen sein, dass die Kaffeemühle bezogen auf eine zur Richtung der Antriebsrotationsachse senkrechte Richtung und/oder bezogen auf eine zur Richtung der Abtriebsrotationsachse senkrechte Richtung selbstzentrierend an die Antriebsvorrichtung ankoppelbar ist oder angekoppelt ist.

Bei einer besonderen Ausführung ist die Koppelvorrichtung, mittels der das Gehäuse der Kaffeemühle an die Antriebsvorrichtung ankoppelbar ist, derart ausgebildet, dass sie eine Selbstzentrierung der an die Antriebsvorrichtung ankoppelten Kaffeemühle bezogen auf eine zur Richtung der Antriebsrotationsachse verschiedene Richtung und/oder bezogen auf eine zur Richtung der Abtriebsrotationsachse verschiedene Richtung zulässt. Insbesondere kann die Koppelvorrichtung derart ausgebildet sein, dass sie eine Selbstzentrierung der an die Antriebsvorrichtung ankoppelten Kaffeemühle bezogen auf eine zur Richtung der Antriebsrotationsachse senkrechte Richtung und/oder bezogen auf eine zur Richtung der Abtriebsrotationsachse senkrechte Richtung zulässt.

Bei einer ganz besonders vorteilhaften Ausführung ist die drehmomentübertragende Verbindung derart ausgebildet, dass sie von dem Benutzer werkzeugfrei hergestellt werden kann. Alternativ oder zusätzlich kann vorteilhaft vorgesehen sein, dass die drehmomentübertragende Verbindung werkzeugfrei wieder gelöst werden kann. Diese Ausführungen haben den ganz besonderen Vorteil, dass das Kaffeemühlensystem von dem Benutzer, beispielsweise für Reinigungs- oder Wartungszwecke, einfach zerlegt und wieder zusammengebaut werden kann. Darüber hinaus haben diese Ausführungen den ganz besonderen Vorteil, dass die Antriebsvorrichtung einfach abgekoppelt werden kann, um stattdessen eine andere, insbesondere unterschiedliche, Antriebsvorrichtung oder eine Handkurbel ankoppeln zu können.

Ganz besonders robust und beschädigungsunanfällig ist eine Ausführung, bei der die drehmomentübertragende Verbindung als eine Ausgleichskupplung ausgebildet ist oder eine Ausgleichskopplung aufweist. Die Ausgleichskupplung kann beispielsweise derart ausgeführt sein, dass ein Versatz, insbesondere ein Axialversatz, des Antriebselements und des Abtriebselements, insbesondere einer Antriebswelle des Antriebselements und einer Abtriebswelle des Abtriebselement, ausgeglichen wird. Hierzu kann die Ausgleichskupplung beispielsweise nach dem Prinzip einer Oldhamkupplung ausgebildet sein. Es ist alternativ oder zusätzlich auch möglich, dass die Ausgleichskupplung dazu ausgebildet ist, einen Winkelfehler des Antriebselements relativ zu dem Abtriebselement, insbesondere einen Winkelfehler einer Antriebswelle des Antriebselements relativ zu einer Abtriebswelle des Abtriebselement, ausgeglichen. Hierzu kann die Ausgleichskupplung beispielsweise nach dem Prinzip eines Kardangelenks ausgebildet sein. Die Ausgleichskupplung kann durch das Antriebselement und das Abtriebselement gebildet sein. Es ist auch möglich, dass die Ausgleichskupplung das Antriebselement und/oder das Abtriebselement beinhaltet.

Bei einer besonders vorteilhaften Ausführung ist die drehmomentübertragende Verbindung derart ausgebildet, dass sie bei einem Antriebsvorgang eine Bewegung des Antriebselements relativ zu dem Abtriebselement, insbesondere eine Kippbewegung und/oder eine Radialbewegung, zulässt. Eine solche Ausführung hat, wie bereits erwähnt, den ganz besonderen Vorteil, dass etwaig, insbesondere aufgrund eines Versatzes oder Winkelfehlers, auftretende Kräfte keine schädliche Wirkung entfalten können.

Beispielsweise kann das Antriebselement einen quer zu einer Antriebswelle angeordneten Mitnehmerbalken aufweisen. Insbesondere kann der Mitnehmerbalken senkrecht zur Rotationsachse der Antriebswelle angeordnet sein. Der Mitnehmerbalken hat die Funktion, mit wenigstens einem Bauteil des Abtriebselements zusammen zu wirken, um ein Drehmoment zu übertragen. Hierzu kann das Abtriebselement beispielsweise eine Gabel mit, insbesondere in Richtung der Rotationsachse des Antriebselements und/oder in Richtung der Rotationsachse des Abtriebselements ausgerichteten, Zinken aufweisen. Hierbei können die Zinken unmittelbar an dem Mitnehmerbalken anliegen, um ein Drehmoment von dem Abtriebselement zu dem Antriebselement zu übertragen. Eine derartige Ausbildung des Kaffeebohnensystems hat den ganz besonderen Vorteil, dass sich die Kaffeemühle relativ zu der Antriebsvorrichtung während des Antriebsvorganges automatisch selbst zentriert, insbesondere wenn das Gehäuse beweglich an der Antriebsvorrichtung, insbesondere an einem Stativ der Antriebsvorrichtung, gehalten ist.

Der Mittnehmerbalken kann beispielsweise durch eine Durchgangsbohrung der Antriebswelle verlaufen. Hierbei kann vorteilhaft wenigstens ein Befestigungselement, insbesondere eine Klemmschraube, vorhanden sein, mittels der der Mitnehmerbalken relativ zu der Antriebswelle fixierbar ist.

Bei einer vorteilhaften Ausführung ist das Gehäuse mittels einer Koppelvorrichtung beweglich an die Antriebsvorrichtung ankoppelbar oder angekoppelt.

Bei einer ganz besonders vorteilhaften Ausführung sind das Antriebselement und das Abtriebselement derart ausgebildet und angeordnet, dass die drehmomentübertragende Verbindung automatisch hergestellt wird, wenn das Gehäuse mittels der Koppelvorrichtung an der Antriebsvorrichtung befestigt wird. Beispielsweise kann vorteilhaft vorgesehen sein, dass die Koppelvorrichtung ein erstes Koppelelement der Antriebsvorrichtung und ein zweites Koppelelement, das an dem Gehäuse angeordnet ist, aufweist, wobei die Koppelelemente, das Antriebselement und das Abtriebselement derart ausgebildet und positioniert sind, dass das Antriebselement und das Abtriebselement automatisch und vorzugsweise unvermeidbar miteinander in Wirkverbindung kommen, wenn eine Wirkverbindung des ersten Koppelelements mit dem zweiten Koppelelement hergestellt wird. Eine solche Ausführung hat den ganz besonderen Vorteil, dass der Benutzer die Kaffeemühle ganz einfach an die Antriebsvorrichtung ankoppeln kann, ohne in aufwändiger Weise mehrere Koppelverbindungen herstellen zu müssen.

Die Koppelvorrichtung ist vorzugsweise dazu ausgebildet und angeordnet, ein über das Antriebselement in das Mahlwerk eingeleitetes Drehmoment abzustützen. Mit anderen Worten wird bei einer solchen Ausführung mittels der Koppelvorrichtung verhindert, dass sich das Gehäuse mitdreht, wenn über das Abtriebselement ein Drehmoment in das Antriebselement eingeleitet wird. Hierzu ist es jedoch nicht vorteilhaft, jegliche mögliche Bewegung des Gehäuses und seines Inhalts zu unterbinden. Vielmehr kann, wie bereits ausführlich erwähnt, vorgesehen sein, dass die Koppelvorrichtung derart ausgebildet ist, dass Bewegungen des Gehäuses, insbesondere solche Bewegungen, die für einen Zentriervorgang, insbesondere einen Selbstzentriervorgang, erforderlich sind, möglich sind. Dies kann beispielsweise dadurch erreicht werden, dass die Koppelvorrichtung dazu ausgebildet ist, eine Schwenkbewegung, insbesondere eine Schwenkbewegung um eine zur Rotationsachse der Antriebswelle senkrechte Achse, und/oder eine Linearbewegung, insbesondere eine lineare Bewegung in einer zur Rotationsachse der Antriebswelle senkrechten Ebene, während eines Antriebsvorganges zuzulassen. Auch Ausführungen, bei der die Koppelvorrichtung andere Bewegungen alternativ oder zusätzlich zulässt, sind grundsätzlich möglich.

Die Koppelvorrichtung kann beispielsweise zwei Kopplungselemente aufweisen, von denen eines Teil der Antriebsvorrichtung ist und von denen das andere an dem Gehäuse angeordnet ist und die miteinander in Wirkverbindung gebracht werden können, um das Gehäuse drehfest mit der Antriebsvorrichtung zu koppeln. Wie weiter unten noch im Detail ausgeführt ist, kann eines der Kopplungselemente beispielsweise als Steckzapfen ausgebildet sein, während das andere der Kopplungselemente als Steckzapfenaufnahme ausgebildet ist.

Insbesondere kann das an dem Gehäuse angeordnete Kopplungselement derart angeordnet sein, dass es als Drehmomentabstützung fungieren kann, wenn die Kaffeemühle statt mit der Antriebsvorrichtung mit einer Handkurbel angetrieben wird. Insbesondere kann das an dem Gehäuse angeordnete Kopplungselement derart positioniert sein, dass es an dem Daumen, insbesondere an der Daumenspitze, der Hand des Benutzers anliegt, die das, vorzugsweise kreiszylinderförmige, Gehäuse ganz oder teilweise umgreift. Auf diese Weise kann der Benutzer das Drehmoment, das beim Betätigen der Handkurbel auf das Gehäuse wirkt, einfach mittels seines Daumens, insbesondere formschlüssig, abstützen, wobei er das Gehäuse vergleichsweise locker festhalten kann. Das an dem Gehäuse angeordnete Kopplungselement fungiert hierbei vorzugsweise als Anschlagelement und der Daumen als Gegenanschlagelement. Dies hat den ganz besonderen Vorteil, dass der Benutzer das Drehmoment nicht oder zumindest nur zu einem geringen Teil dadurch abstützen muss, dass er das Gehäuse besonders fest umgreift, um eine zum Abstützen des Drehmoments ausreichende Reibverbindung zwischen seiner Hand und dem Gehäuse herzustellen. Anstelle der oben beschriebenen Ausbildung des an dem Gehäuse angeordneten Kopplungselements als "Daumenstopper" ist es alternativ auch möglich, das Kopplungselement derart anzuordnen, dass es statt mit dem Daumen mit einem oder mehreren anderen Fingern der Hand, die das Gehäuse festhält, zusammenwirkt.

Bei einer ganz besonders vorteilhaften Ausführung weist die Koppelvorrichtung einen an dem Gehäuse angeordneten Steckzapfen auf, der entlang einer Einsteckrichtung in eine Steckzapfenaufnahme der Antriebsvorrichtung einsteckbar ist. Alternativ kann auch vorgesehen sein, dass die Antriebsvorrichtung einen Steckzapfen aufweist, der entlang einer Einsteckrichtung in eine an dem Gehäuse angeordnete Steckzapfenaufnahme einsteckbar ist. Diese Ausführungen erlauben ein ganz besonders einfaches Ankoppeln des Gehäuses an die Antriebsvorrichtung, indem der Steckzapfen in die Steckzapfenaufnahme eingeführt wird.

Das an dem Gehäuse angeordnete Kopplungselement kann insbesondere einstückig mit dem Gehäuse hergestellt sein. Es ist alternativ auch möglich, dass das an dem Gehäuse angeordnete Kopplungselement mittels einer stoffschlüssigen Verbindung fest mit dem Gehäuse verbunden ist. Alternativ ist es auch möglich, dass das Kopplungselement formschlüssig und/oder reibschlüssig, beispielsweise durch wenigstens eine Schraubverbindung an dem Gehäuse befestigt ist.

Bei einer ganz besonders vorteilhaften Ausführung ist das Kopplungselement mittels wenigstens einer Schelle an dem Gehäuse befestigt, die das Gehäuse umgreift.

Insbesondere kann vorteilhaft eine Befestigungsvorrichtung zum Befestigen des Kopplungselements an dem Gehäuse vorhanden sein. Die Befestigungsvorrichtung kann insbesondere derart ausgebildet sein, dass das Kupplungselement an dem Gehäuse befestigt werden kann, ohne das Gehäuse zu beschädigen. Insbesondere kann die Befestigungsvorrichtung vorteilhaft derart ausgebildet sein, dass eine Nachrüstung existierender Kaffeemühlen möglich ist, die keine Kopplungsvorrichtung zum Ankoppeln an eine Antriebsvorrichtung aufweisen. Insbesondere hierzu kann die Befestigungsvorrichtung vorteilhaft wenigstens eine Schelle aufweisen, die das Gehäuse umgreift.

Insbesondere kann eine solche Koppelvorrichtung in der Weise ausgebildet sein, dass das Gehäuse im angekoppelten Zustand relativ zu der Antriebsvorrichtung um die in Einsteckrichtung verlaufende Mittelachse des Steckzapfens schwenkbar ist und/oder dass das Gehäuse im angekoppelten Zustand relativ zu der Antriebsvorrichtung entlang der in Einsteckrichtung verlaufenden Mittelachse des Steckzapfens verschiebbar ist. Eine solche Ausführung ist ein Beispiel dafür, wie die Koppelvorrichtung ausgebildet werden kann, um Bewegungen des Gehäuses, insbesondere solche Bewegungen, die für einen Zentriervorgang, insbesondere einen Selbstzentriervorgang, erforderlich sind, ermöglicht sind.

Bei einer ganz besonders flexibel einsetzbaren Ausführung weist das Kaffeemühlensystem eine Handkurbel auf. Bei dieser Ausführung ist die Kaffeemühle dazu ausgebildet, wahlweise entweder an die Antriebsvorrichtung oder an die Handkurbel angekoppelt zu werden. Der Benutzer hat insoweit die Wahl, die Kaffeemühle entweder mit der Handkurbel zu betreiben oder die Kaffeemühle an die, vorzugsweise elektrische, Antriebsvorrichtung anzukoppeln. Beispielsweise hat der Benutzer die Möglichkeit, die Kaffeemühle samt der Handkurbel auf Reisen mitzunehmen und zu verwenden, während er die Kaffeemühle zuhause in Kombination mit der Antriebsvorrichtung verwendet.

Ganz besonders vorteilhaft ist eine Ausführung, bei der die Kaffeemühle werkzeugfrei und/oder werkzeugfrei wieder lösbar an die Handkurbel angekoppelt werden kann. Hierfür können vorteilhaft insbesondere Steck- und Klemmverbindungen vorgesehen sein. Beispielsweise kann vorteilhaft vorgesehen sein, dass die Handkurbel dazu ausgebildet ist, anstelle des Mitnehmerbalkens in die Durchgangsbohrung der Antriebswelle eingefügt zu werden. Insbesondere kann vorgesehen sein, dass die Handkurbel hierfür zumindest im Endbereich denselben Querschnitt, insbesondere denselben Durchmesser, aufweist, wie der Mitnehmerbalken. Außerdem kann vorteilhaft vorgesehen sein, dass die Handkurbel mittels einer insbesondere axial eingeschraubten, Klemmschraube relativ zu der Antriebswelle fixierbar ist.

Von ganz besonderem Vorteil ist eine Ausführung, bei der das Gehäuse dazu ausgebildet ist, während eines Mahlvorganges in einer Hand eines Benutzers gehalten zu werden, wobei der Benutzer mit seiner anderen Hand die Handkurbel betätigen kann.

Das Gehäuse kann vorteilhaft rohrförmig ausgebildet sein. Eine solche Ausführung hat den besonderen Vorteil, dass sie besonders kompakt und stabil ist. Hierbei kann eine Einfüllöffnung beispielsweise durch eine obere Rohröffnung gebildet sein. Das Gehäuse kann zumindest abschnittsweise zylinderförmig, insbesondere kreiszylinderförmig, ausgebildet sein. Insbesondere kann vorteilhaft vorgesehen sein, dass das Gehäuse in einer Querschnittsebene senkrecht zu seiner Längserstreckungsrichtung eine kreisförmige Außenkontur und/oder eine kreisförmige Innenkontur aufweist.

Das Gehäuse kann eine Antriebswelle beinhalten, die sich in Längserstreckungsrichtung des, insbesondere rohrförmigen, Gehäuses erstreckt. Insbesondere kann das Gehäuse wenigstens einen Lagerbock aufweisen, mittels dem wenigstens ein Mühlenelement insbesondere das Antriebselement oder wenigstens die Antriebswelle des Antriebselements oder ein Bauteil des Mahlwerks, wie beispielsweise ein Mahlkegel, relativ zu dem Gehäuse rotierbar gelagert ist.

Vorzugsweise weist das Gehäuse eine Einfüllöffnung für zu mahlende Kaffeebohnen und eine Ausgabeöffnung für das Kaffeepulver auf. Die Ausgabeöffnung kann beispielsweise durch eine untere Rohröffnung gebildet sein, wenn das Gehäuse rohrförmig ausgebildet ist.

Bei einer ganz besonders vorteilhaften Ausführung umgibt das Gehäuse einen Aufnahmeraum für zu mahlende Kaffeebohnen. Eine solche Ausführung hat den ganz besonderen Vorteil, dass ein Vorrat an zu mahlenden Kaffeebohnen eingefüllt und nötigenfalls auch über einen längeren Zeitraum in dem Aufnahmeraum verbleiben kann. Darüber hinaus hat eine solche Ausführung den ganz besonderen Vorteil, dass zur Ausbildung des Aufnahmeraums im Wesentlichen keine zusätzlichen Bauteile erforderlich sind.

In der Zeichnung ist der Erfindungsgegenstand beispielhaft und schematisch dargestellt und wird anhand der Figuren nachfolgend beschrieben, wobei gleiche oder gleich wirkende Elemente auch in unterschiedlichen Ausführungsbeispielen zumeist mit denselben Bezugszeichen versehen sind. Dabei zeigen:
- Fig. 1: ein Ausführungsbeispiel eines erfindungsgemäßen Kaffeemühlensystems in einer perspektivischen Ansicht,
- Fig. 2: die Antriebsvorrichtung des Ausführungsbeispiels eines erfindungsgemäßen Kaffeemühlensystems,
- Fig. 3: die Kaffeemühle des Ausführungsbeispiels eines erfindungsgemäßen Kaffeemühlensystems,
- Fig. 4: die Kaffeemühle des Ausführungsbeispiels eines erfindungsgemäßen Kaffeemühlensystems, an die eine Handkurbel angekoppelt ist, und
- Fig. 5: ein weiteres Ausführungsbeispiel eines erfindungsgemäßen Kaffeemühlensystems in einer perspektivischen Ansicht.

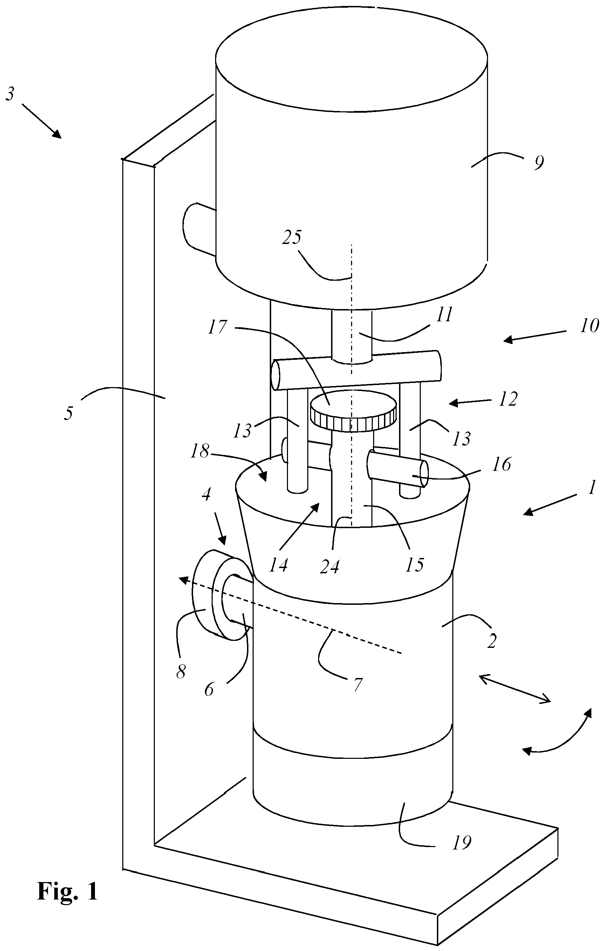

Fig. 1 zeigt ein Ausführungsbeispiel eines erfindungsgemäßen Kaffeemühlensystems in einer perspektivischen Ansicht. Das Kaffeemühlensystem weist eine Kaffeemühle 1 auf, die ein Gehäuse 2 und ein in dem Gehäuse 2 angeordnetes (nicht dargestelltes) Mahlwerk beinhaltet. Das Kaffeemühlensystem weist außerdem eine Antriebsvorrichtung 3 zum Antreiben des Mahlwerks auf. Die Kaffeemühle 1 ist beweglich und selbstzentrierend an die Antriebsvorrichtung 3 angekoppelt.

Das Gehäuse 2 ist mittels einer Koppelvorrichtung 4 beweglich an ein Stativ 5 der Antriebsvorrichtung 3 angekoppelt. Die Koppelvorrichtung 4 weist zwei Kopplungselemente auf, von denen eines beispielsweise als Steckzapfen 6 ausgebildet ist, während das andere der Kopplungselemente als Steckzapfenaufnahme 8 ausgebildet ist. Die Koppelvorrichtung 4 weist einen an dem Gehäuse 2 angeordneten Steckzapfen 6 auf, der entlang einer Einsteckrichtung 7 in eine Steckzapfenaufnahme 8 der Antriebsvorrichtung 3 eingesteckt ist. Das Kaffeemühlensystem erlaubt ein ganz besonders einfaches Ankoppeln des Gehäuses 2 an die Antriebsvorrichtung 3, indem der Steckzapfen 6 in die Steckzapfenaufnahme 8 eingeführt wird. Die Kaffeemühle 1 ist in dem dargestellten angekoppelten Zustand relativ zu der Antriebsvorrichtung 3 um die in Einsteckrichtung 7 verlaufende Mittelachse des Steckzapfens 6 schwenkbar und relativ zu der Antriebsvorrichtung 3 entlang der in Einsteckrichtung 7 verlaufenden Mittelachse des Steckzapfens 6 verschiebbar gehalten.

Die Antriebsvorrichtung 3 weist eine elektrische Antriebseinheit 9 mit einem (nicht dargestellten) elektrischen Antriebsmotor auf. Die elektrische Antriebseinheiten 9 ist fest mit dem Stativ 5 verbunden. Die elektrische Antriebseinheit 9 kann wenigstens ein dem elektrischen Antriebsmotor triebtechnisch nachgeschaltetes Getriebe aufweisen. Außerdem weist die elektrische Antriebseinheit 9 ein Abtriebselement 10 auf. Das Abtriebselement 10 beinhaltet eine Abtriebswelle 11 und eine drehfest mit der Abtriebswelle 11 verbundene Gabel 12 mit in Richtung der Abtriebsrotationsachse 25 des Abtriebselements 10 ausgerichteten Zinken 13.

Die Kaffeemühle 1 weist ein Antriebselement 14 auf, das eine Antriebswelle 15 beinhaltet. Die Antriebswelle 15 des Antriebselements 14 ist drehfest mit einem (nicht dargestellten) Mahlrotor des (nicht dargestellten) Mahlwerks verbunden. Das Antriebselement 14 weist einen quer zu der Antriebswelle 15 angeordneten Mitnehmerbalken 16 auf, der senkrecht zur Antriebsrotationsachse 24 der Antriebswelle 15 angeordnet ist. Der Mittnehmerbalken 16 verläuft durch eine Durchgangsbohrung der Antriebswelle 15 und ist mit einer axial angeordneten Klemmschraube 17, die stirnseitig in eine axiale Gewindebohrung der Antriebswelle 15 eingeschraubt ist, relativ zu der Antriebswelle fixiert. Die Klemmschraube 17 ist räumlich zwischen den Zinken 13 angeordnet.

Der Mitnehmerbalken 16 hat die Funktion, mit dem Abtriebselement 10 zusammen zu wirken, um ein Drehmoment zu übertragen. Hierzu liegen die Zinken 13 unmittelbar an dem Mitnehmerbalken 16 an, um ein Drehmoment von dem Abtriebselement 10 zu dem Antriebselement 14 zu übertragen.

Das Antriebselement 14 der Kaffeemühle 1 und das Abtriebselement 10 der Antriebsvorrichtung 3 sind derart ausgebildet und angeordnet, dass die drehmomentübertragende Verbindung zwischen ihnen automatisch hergestellt wird, wenn das Gehäuse 2 mittels der Koppelvorrichtung 4 beweglich an der Antriebsvorrichtung 3 befestigt wird.

Das Gehäuse 2 ist im Wesentlichen rohrförmig ausgebildet, wobei eine Einfüllöffnung 18 für die zu mahlenden Kaffeebohnen am oberen Ende ausgebildet ist. Das Gehäuse 2 ist am unteren Ende an einen werkzeugfrei lösbaren Auffangbehälter 19 für das Kaffeepulver angekoppelt.

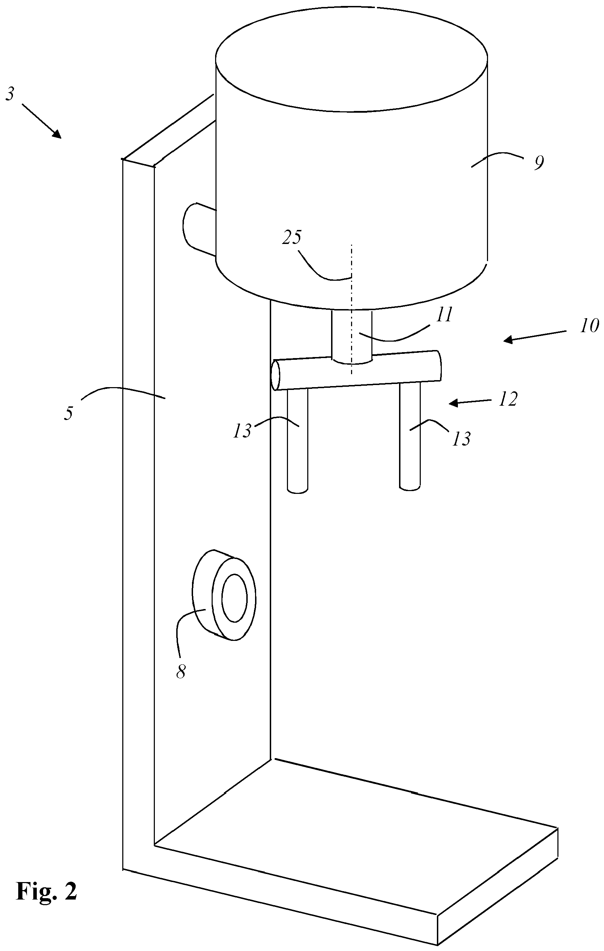

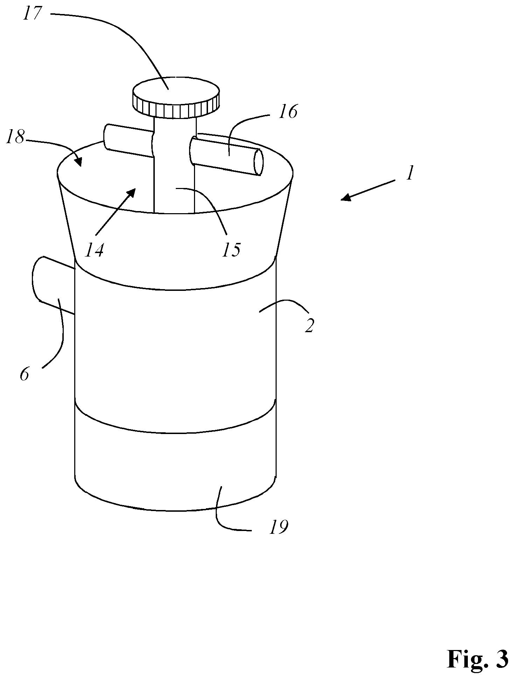

Figur 2 zeigt die Antriebsvorrichtung 3 des Ausführungsbeispiels eines erfindungsgemäßen Kaffeemühlensystems bei abgenommener Kaffeemühle 1, während die Figur 3 die abgenommene Kaffeemühle 1 zeigt.

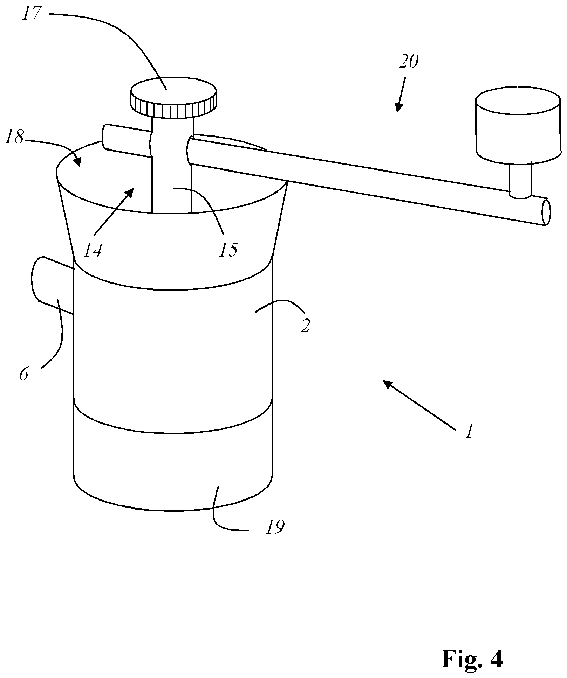

Figur 4 zeigt die Kaffeemühle 1 des Ausführungsbeispiels, an die eine Handkurbel 20 angekoppelt ist. Zum Ankoppeln der Handkurbel 20 wird zunächst die Klemmschraube 17 gelöst, um den Mitnehmerbalken 16 aus der Durchgangsbohrung der Antriebswelle 15 herausziehen zu können. Anschließend wird ein Ankoppelnende der Handkurbel 20 in die Durchgangsbohrung der Antriebswelle 15 gesteckt und mittels der Klemmschraube 17 fixiert. Die Kaffeemühle 1 kann in dem dargestellten Zustand statt mit der Antriebsvorrichtung 3 manuell mittels der Handkurbel 20 betrieben werden, indem der Benutzer das Gehäuse 2 in einer Hand hält, während er mit seiner anderen Hand die Handkurbel 20 betätigt.

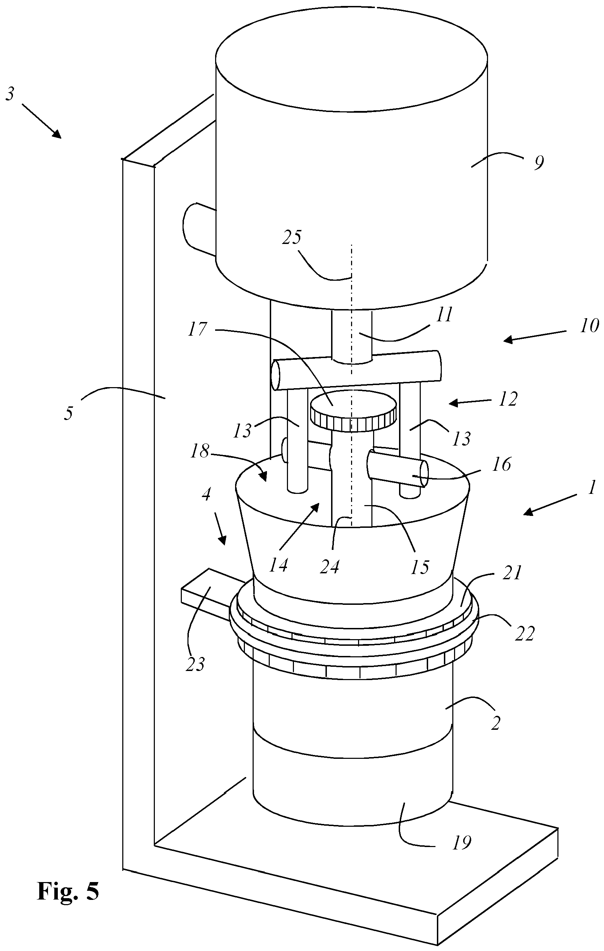

Figur 5 zeigt ein weiteres Ausführungsbeispiel eines erfindungsgemäßen Kaffeemühlensystems in einer perspektivischen Ansicht. Das Kaffeemühlensystem unterscheidet sich von dem in den Figuren 1 und 2 dargestellten Kaffeemühlensystem dadurch, dass die Koppelvorrichtung 4 einen starren Haltering 22 aufweist, in dem ein Elastomerring 21, der beispielsweise ein Gummiring sein kann, befestigt ist. Der Elastomerring 21 umgibt das Gehäuse 2 der Kaffeemühle 1. Der Haltering 22 ist mittels einer Bajonettverbindung 23 an dem Stativ 5 befestigt. Die Bajonettverbindung 23 ist vorzugsweise derart ausgebildet, dass die Kaffeemühle 1 werkzeugfrei von dem Stativ 5 gelöst und werkzeugfrei an dem Stativ 5 festgelegt werden kann.

Durch die besondere Ausbildung der Koppelvorrichtung 4 und insbesondere durch die Elastizität des Elastomerrings 21 der Koppelvorrichtung 4 ist die Kaffeemühle 1 beweglich und/oder selbstzentrierend an die Antriebsvorrichtung angekoppelt. Die Koppelvorrichtung 4 kann derart ausgebildet sein, dass keine Bewegung der an die Antriebsvorrichtung 3 ankoppelten Kaffeemühle 1 in Richtung der Antriebsrotationsachse 25 und/oder in Richtung der Abtriebsrotationsachse 24 möglich ist. Beispielsweise können hierzu (nicht dargestellte) Anschläge an dem Gehäuse 2 vorhanden sein, die sich an dem Haltering 22 abstützen und so eine solche Bewegung verhindern.

### Bezugszeichenliste:

- 1: Kaffeemühle
- 2: Gehäuse
- 3: Antriebsvorrichtung
- 4: Koppelvorrichtung
- 5: Stativ
- 6: Steckzapfen
- 7: Einsteckrichtung
- 8: Steckzapfenaufnahme
- 9: Antriebseinheit
- 10: Abtriebselement
- 11: Abtriebswelle
- 12: Gabel
- 13: Zinken
- 14: Antriebselement
- 15: Antriebswelle
- 16: Mitnehmerbalken
- 17: Klemmschraube
- 18: Einfüllöffnung
- 19: Auffangbehälter
- 20: Handkurbel
- 21: Elastomerring
- 22: Haltering
- 23: Bajonettverbindung
- 24: Antriebsrotationsachse
- 25: Abtriebsrotationsachse

## Patentansprüche

1. Kaffeemühlensystem mit einer Kaffeemühle (1), die ein Gehäuse (2) und ein in dem Gehäuse (2) angeordnetes Mahlwerk beinhaltet, und mit einer Antriebsvorrichtung (3), insbesondere einer Antriebsvorrichtung (3), die einen elektrischen Antriebsmotor aufweist, zum Antreiben des Mahlwerks, **dadurch gekennzeichnet, dass** die Kaffeemühle (1) beweglich und/oder selbstzentrierend an die Antriebsvorrichtung (3) ankoppelbar ist oder angekoppelt ist.

2. Kaffeemühlensystem nach Anspruch 1, **dadurch gekennzeichnet, dass** das Gehäuse (2) mittels einer Koppelvorrichtung (4), insbesondere beweglich, an der Antriebsvorrichtung (3) befestigt ist oder befestigbar ist.

3. Kaffeemühlensystem nach Anspruch 1 oder 2, **dadurch gekennzeichnet, dass** die Kaffeemühle (1) ein um eine Antriebsrotationsachse (24) rotierbar gelagertes Antriebselement (14) zum Einleiten eines Drehmomentes in das Mahlwerk aufweist.

4. Kaffeemühlensystem nach Anspruch 3, **dadurch gekennzeichnet, dass**
a. die Antriebsvorrichtung (3) ein Abtriebselement (10) aufweist, das mit dem Antriebselement (14) drehmomentübertragend verbunden ist oder verbindbar ist, oder dass
b. die Antriebsvorrichtung (3) ein Abtriebselement (10) aufweist, das mit dem Antriebselement (14) drehmomentübertragend verbunden ist oder verbindbar ist, wobei das Abtriebselement (10) um eine Abtriebsrotationsachse (25) rotierbar gelagert ist und/oder um eine Abtriebsrotationsachse (25) zur Rotation angetrieben ist.

5. Kaffeemühlensystem nach Anspruch 3 oder 4, **dadurch gekennzeichnet, dass** das Kaffeemühlensystem wenigstens eines der nachfolgenden Merkmale a bis f aufweist:
a. die an die Antriebsvorrichtung (3) ankoppelte Kaffeemühle (1) ist in einer zur Antriebsrotationsachse (24) senkrechten Ebene beweglich,
b. die an die Antriebsvorrichtung (3) ankoppelte Kaffeemühle (1) ist in einer zur Abtriebsrotationsachse (25) senkrechten Ebene beweglich,
c. die an die Antriebsvorrichtung (3) ankoppelte Kaffeemühle (1) ist in einer zur Antriebsrotationsachse (24) senkrechten Richtung linearbeweglich,
d. die an die Antriebsvorrichtung (3) ankoppelte Kaffeemühle (1) ist in einer zur Abtriebsrotationsachse (25) senkrechten Richtung linearbeweglich,
e. die an die Antriebsvorrichtung (3) ankoppelte Kaffeemühle (1) ist in Richtung der Antriebsrotationsachse (24) unbeweglich,
f. die an die Antriebsvorrichtung (3) ankoppelte Kaffeemühle (1) ist in Richtung der Abtriebsrotationsachse (25) unbeweglich.

6. Kaffeemühlensystem nach einem der Ansprüche 3 bis 5, **dadurch gekennzeichnet, dass** das Kaffeemühlensystem wenigstens eines der nachfolgenden Merkmale a bis d aufweist:
a. die an die Antriebsvorrichtung (3) ankoppelte Kaffeemühle (1) ist um eine zur Antriebsrotationsachse (24) nichtparallele und nichtkoaxiale Schwenkachse schwenkbar,
b. die an die Antriebsvorrichtung (3) ankoppelte Kaffeemühle (1) ist um eine zur Abtriebsrotationsachse (25) nichtparallele und nichtkoaxiale Schwenkachse schwenkbar,
c. die an die Antriebsvorrichtung (3) ankoppelte Kaffeemühle (1) ist um eine zur Antriebsrotationsachse (24) senkrechte Schwenkachse schwenkbar,
d. die an die Antriebsvorrichtung (3) ankoppelte Kaffeemühle (1) ist um eine zur Abtriebsrotationsachse (25) senkrechte Schwenkachse schwenkbar.

7. Kaffeemühlensystem nach einem der Ansprüche 3 bis 6, **dadurch gekennzeichnet, dass** das Kaffeemühlensystem wenigstens eines der nachfolgenden Merkmale a bis d aufweist:
a. die Kaffeemühle (1) ist bezogen auf eine zur Richtung der Antriebsrotationsachse (24) verschiedene Richtung selbstzentrierend an die Antriebsvorrichtung (3) ankoppelbar ist oder angekoppelt,
b. die Kaffeemühle (1) ist bezogen auf eine zur Richtung der Abtriebsrotationsachse (25) verschiedene Richtung selbstzentrierend an die Antriebsvorrichtung (3) ankoppelbar ist oder angekoppelt,
c. die Kaffeemühle (1) ist bezogen auf eine zur Richtung der Antriebsrotationsachse (24) senkrechte Richtung selbstzentrierend an die Antriebsvorrichtung (3) ankoppelbar ist oder angekoppelt,
d. die Kaffeemühle (1) ist bezogen auf eine zur Richtung der Abtriebsrotationsachse (25) senkrechte Richtung selbstzentrierend an die Antriebsvorrichtung (3) ankoppelbar ist oder angekoppelt.

8. Kaffeemühlensystem nach einem der Ansprüche 3 bis 7, **dadurch gekennzeichnet, dass** das Kaffeemühlensystem wenigstens eines der nachfolgenden Merkmale a bis d aufweist:
a. die drehmomentübertragende Verbindung ist werkzeugfrei herstellbar und/oder die drehmomentübertragende Verbindung ist werkzeugfrei wieder lösbar,
b. die drehmomentübertragende Verbindung ist als eine Ausgleichskupplung ausgebildet oder weist eine Ausgleichskopplung auf,
c. die drehmomentübertragende Verbindung lässt bei einem Antriebsvorgang eine Bewegung des Antriebselements (14) relativ zu dem Abtriebselement (10), insbesondere eine Kippbewegung und/oder eine Radialbewegung, zu,
d. das Antriebselement (14) und das Abtriebselement (10) sind derart ausgebildet und angeordnet, dass die drehmomentübertragende Verbindung automatisch hergestellt wird, wenn das Gehäuse (2) mittels der Koppelvorrichtung (4) an der Antriebsvorrichtung (3) befestigt wird.

9. Kaffeemühlensystem nach einem der Ansprüche 3 bis 8, **dadurch gekennzeichnet, dass**
a. das Antriebselement (14) einen quer zu einer Antriebswelle angeordneten Mitnehmerbalken (16) aufweist und dass das Abtriebselement (10) eine Gabel mit, insbesondere in Axialrichtung ausgerichteten, Zinken (13) aufweist, und/oder dass
b. das Antriebselement (14) einen quer zu einer Antriebswelle angeordneten Mitnehmerbalken (16) aufweist, der durch eine Durchgangsbohrung der Antriebswelle verläuft, und dass das Abtriebselement (10) eine Gabel mit, insbesondere in Axialrichtung ausgerichteten, Zinken (13) aufweist und/oder dass
c. das Antriebselement (14) einen quer zu einer Antriebswelle angeordneten Mitnehmerbalken (16) aufweist und dass das Abtriebselement (10) eine Gabel mit, insbesondere in Axialrichtung ausgerichteten, Zinken (13) aufweist, wobei der Mittnehmerbalken (16) mittels eines Befestigungselements, insbesondere mittels einer Klemmschraube (17), an oder in dem Antriebselement, insbesondere an oder in der Antriebswelle (15), befestigt und/oder fixiert ist.

10. Kaffeemühlensystem nach einem der Ansprüche 1 bis 9, **dadurch gekennzeichnet, dass** das Kaffeemühlensystem wenigstens eines der nachfolgenden Merkmale a bis f aufweist:
a. die Koppelvorrichtung (4) ist dazu ausgebildet und angeordnet, ein über das Antriebselement (14) in das Mahlwerk eingeleitetes Drehmoment abzustützen,
b. die Koppelvorrichtung (4) ist dazu ausgebildet, eine Schwenkbewegung und/oder eine Linearbewegung während eines Antriebsvorganges zuzulassen,
c. die Koppelvorrichtung (4) weist zwei Kopplungselemente auf, von denen eines Teil der Antriebsvorrichtung ist und von denen das andere an dem Gehäuse (2) angeordnet ist,
d. das an dem Gehäuse (2) angeordnete Kopplungselement ist derart angeordnet, dass es als Drehmomentabstützung fungieren kann, wenn die Kaffeemühle (1) statt mit der Antriebsvorrichtung (3) mit einer Handkurbel (20) angetrieben wird,
e. das an dem Gehäuse (2) angeordnete Kopplungselement ist derart relativ zu dem Gehäuse (2) positioniert, dass es an dem Daumen, insbesondere an der Daumenspitze, der Hand des Benutzers anliegt, die das, vorzugsweise kreiszylinderförmige, Gehäuse (2) ganz oder teilweise umgreift,
f. das an dem Gehäuse (2) angeordnete Kopplungselement ist mittels wenigstens einer Schelle an dem Gehäuse (2) befestigt.

11. Kaffeemühlensystem nach einem der Ansprüche 1 bis 10, **dadurch gekennzeichnet, dass**
a. die Koppelvorrichtung (4) einen an dem Gehäuse (2) angeordneten Steckzapfen (6) aufweist, der entlang einer Einsteckrichtung (7) in eine Steckzapfenaufnahme (8) der Antriebsvorrichtung (3) einsteckbar ist, oder dass
b. die Antriebsvorrichtung (3) einen Steckzapfen (6) aufweist, der entlang einer Einsteckrichtung (7) in eine an dem Gehäuse (2) angeordnete Steckzapfenaufnahme (8) einsteckbar ist.

12. Kaffeemühlensystem nach Anspruch 11, **dadurch gekennzeichnet, dass**
a. das Gehäuse (2) im angekoppelten Zustand relativ zu der Antriebsvorrichtung (3) um die in Einsteckrichtung (7) verlaufende Mittelachse des Steckzapfens (6) schwenkbar ist, und/oder dass
b. das Gehäuse (2) im angekoppelten Zustand relativ zu der Antriebsvorrichtung (3) entlang der in Einsteckrichtung (7) verlaufenden Mittelachse des Steckzapfens (6) verschiebbar ist.

13. Kaffeemühlensystem nach einem der Ansprüche 1 bis 12, **dadurch gekennzeichnet, dass** das Kaffeemühlensystem eine Handkurbel (20) aufweist und dass die Kaffeemühle (1) dazu ausgebildet ist, wahlweise entweder an die Antriebsvorrichtung (3) oder an die Handkurbel (20) angekoppelt zu werden.

14. Kaffeemühlensystem nach Anspruch 13, **dadurch gekennzeichnet, dass** das Kaffeemühlensystem wenigstens eines der nachfolgenden Merkmale a bis c aufweist:
a. die Kaffeemühle (1) ist werkzeugfrei und/oder werkzeugfrei wieder lösbar an die Handkurbel (20) ankoppelbar,
b. die Handkurbel (20) ist dazu ausgebildet, anstelle des Mitnehmerbalkens (16) in die Durchgangsbohrung eingefügt zu werden,
c. das Gehäuse (2) ist dazu ausgebildet, während eines Mahlvorganges in einer Hand eines Benutzers gehalten zu werden, wobei der Benutzer mit seiner anderen Hand die Handkurbel (20) betätigen kann.

15. Kaffeemühlensystem nach einem der Ansprüche 1 bis 14, **dadurch gekennzeichnet, dass** das Kaffeemühlensystem wenigstens eines der nachfolgenden Merkmale a bis d aufweist:
a. das Gehäuse (2) ist rohrförmig ausgebildet,
b. das Gehäuse (2) weist in einer Querschnittsebene senkrecht zu seiner Längserstreckungsrichtung eine kreisförmige Außenkontur und/oder eine kreisförmige Innenkontur auf,
c. das Gehäuse (2) weist eine Einfüllöffnung (18) für zu mahlende Kaffeebohnen auf,
d. das Gehäuse (2) umgibt einen Aufnahmeraum für zu mahlende Kaffeebohnen.
